## Europäisches Patentamt
## European Patent Office
## Office européen des brevets

(19)

(11) Numéro de publication: **0 036 058**
**A1**

(12)

# DEMANDE DE BREVET EUROPEEN

(21) Numéro de dépôt: **80420035.0**

(22) Date de dépôt: **14.03.80**

(51) Int. Cl.³: **B 60 J 1/20**

(43) Date de publication de la demande:
**23.09.81 Bulletin 81/38**

(84) Etats contractants désignés:
**AT BE CH DE GB IT NL SE**

(71) Demandeur: **Grellet, Pierre**
**Montée de la Reytière**
**F-38300 Domarin(FR)**

(71) Demandeur: **Demerseman, Pierre**
**25 Avenue de l'Europe**
**F-92310 Sevres(FR)**

(72) Inventeur: **Grellet, Pierre**
**Montée de la Reytière**
**F-38300 Domarin(FR)**

(72) Inventeur: **Demerseman, Pierre**
**25 Avenue de l'Europe**
**F-92310 Sevres(FR)**

(74) Mandataire: **Maisonnier, Jean**
**Bureau Maisonnier 28 Rue Servient**
**F-69003 Lyon(FR)**

(54) **Déflecteur de portière pour un véhicule automobile.**

(57) Le déflecteur comprend une bande plane, transparente ou translucide (5) destinée à être fixée le long du bord supérieur sensiblement horizontal (2) et le long du bord avant incliné (3) d'une fenêtre de portière, et comprenant, lorsqu'elle est posée à plat, deux parties (7) et (8) sensiblement rectilignes formant entre elles un angle plus ouvert que l'angle formé par les deux bords précités (2) et (3) de la fenêtre. Le bord longitudinal supérieur de la bande (5) est solidaire d'un profilé rapporté comportant une aile latérale qu'on engane à l'intérieur de l'encadrement de la fenêtre.

FIG 2

EP 0 036 058 A1

La présente invention concerne un déflecteur de portière pour un véhicule automobile.

L'invention s'adresse aux véhicules comportant, à l'avant, des vitres de portière coulissantes qui s'effacent en pénétrant à l'intérieur d'un logement prévu au centre du corps inférieur de portière. Du fait que ces vitres se déplacent vers le bas pour permettre l'ouverture de la fenêtre correspondante du véhicule, l'ouverture des fenêtres pendant la marche du véhicule se traduit, pour un léger abaissement des vitres, par l'apparition d'un courant d'air désagréable provenant d'un interstice qui s'étend généralement le long du bord supérieur sensiblement horizontal des fenêtres, ainsi que le long de leur bord avant incliné. En effet, compte tenu de l'emplacement de l'interstice, le courant d'air arrive en plein sur le visage des passagers.

L'invention a pour but de réaliser un déflecteur de portière qui permette d'éviter cet inconvénient au moindre prix, et sans transformation du véhicule.

Un déflecteur de portière suivant l'invention comprend une bande de matériau en plaque, transparent ou translucide, destiné à être fixée le long du bord supérieur sensiblement horizontal et le long du bord avant incliné d'une fenêtre de portière, est caractérisé en ce que ladite bande, qui est constituée par une portion d'une plaque plane flexible, comprend deux parties sensiblement rectilignes formant entre elles un angle plus ouvert que les deux bords précités de la fenêtre, tandis que le bord longitudinal supérieur de cette bande est solidaire d'un profilé rapporté qui est fait en une autre matière que la bande, et qui comporte une aile qu'on engage à l'intérieur de l'encadrement de la fenêtre.

Suivant une caractéristique supplémentaire de l'invention, le profilé est fait en une matière souple.

Suivant une caractéristique supplémentaire de l'invention, le profilé comprend d'une part une gouttière ouverte vers le bas qui vient coiffer le bord longitudinal supérieur de la bande, et d'autre part une aile latérale qui s'étend vers le haut à partir d'une portion sensiblement horizontale solidaire du bord inférieur de l'aile interne de la gouttière.

Suivant une caractéristique supplémentaire de l'invention, les faces externes respectives du fond de la gouttière et de l'aile externe de la gouttière du profilé sont munies d'un revêtement métallique poli, et brillant.

Suivant une caractéristique supplémentaire de l'invention, l'aile latérale du profilé comporte contre son bord libre un bourrelet longitudinal, du côté tourné vers la gouttière du profilé, ce bourrelet étant

destiné à venir s'encliqueter au-dessus du bord supérieur d'un rabat métallique interne de l'encadrement de la fenêtre lorsque ladite aile latérale est introduite entre la paroi métallique dudit encadrement et un joint souple à section transversale en U prévu pour venir coiffer le bord supérieur de la vitre, quand la vitre est remontée.

Le dessin annexé, donné à titre d'exemple non limitatif, permettra de mieux comprendre les caractéristiques de l'invention.

- Figure 1 est une vue de dessus d'un vehicule automobile équipé de deux déflecteurs de portière suivant l'invention.

- Figure 2 est une vue latérale de ce véhicule, montrant l'un des deux déflecteurs de portière suivant l'invention.

- Figure 3 est une section III-III (fig 2), la vitre de la portière correspondante étant remontée.

- Figure 4 est une vue montrant un déflecteur au repos, en plan.

- Figure 5 est une section V-V (fig 4).

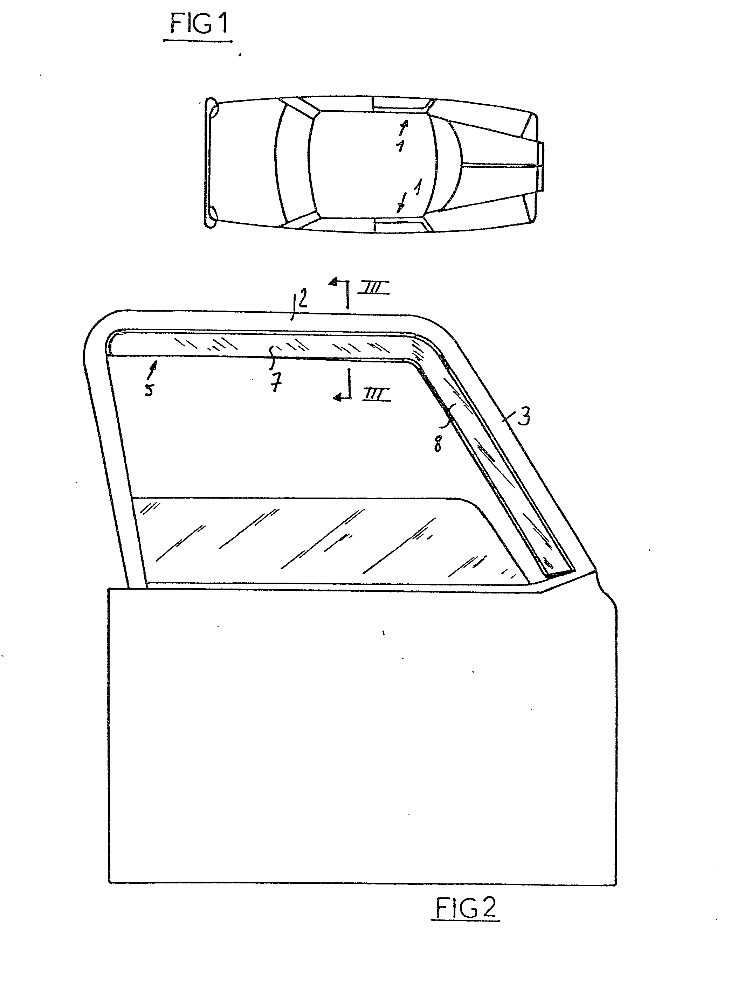

On a représenté sur les figures 1 et 2 un véhicule équipé, à l'avant, de deux déflecteurs 1 suivant l'invention. Chaque déflecteur est fixé le long du bord supérieur sensiblement horizontal 2 d'une portière avant, et le long du bord avant incliné 3 de la même portière.

Le déflecteur correspondant à la portière de droite est visible plus en détail sur les figures 2 à 4.

Ce déflecteur se compose d'une bande 5 et d'un profilé 6.

La bande 5 est découpée dans une plaque flexible d'un matériau transparent ou translucide. La bande 5 est par exemple découpée dans une plaque dé chlorure de polyvinyle, ou P.V.C., possédant par ailleurs les propriétés particulières suivantes :

- la plaque est flexible, mais elle ne mollit pas sous l'effet de la chaleur solaire, elle reste donc toujours relativement rigide ;

- la plaque n'est pas cassantes aux basses températures atmosphériques rencontrées en hiver ;

- la plaque présente une bonne résistance à l'exposition aux rayons ultra-violets, et elle ne donne donc aucun signe de vieillissement à la suite d'une exposition prolongée aux rayons solaires.

La bande 5 comprend deux parties 7 et 8 qui sont sensiblement rectilignes, qui correspondent respectivement aux bords 2 et 3 de la fenêtre, et qui forment entre elles un angle 9 plus ouvert que l'angle formé par les bords 2 et 3 de la fenêtre, ceci lorsque la bande 5 est à plat, au repos (fig. 4).

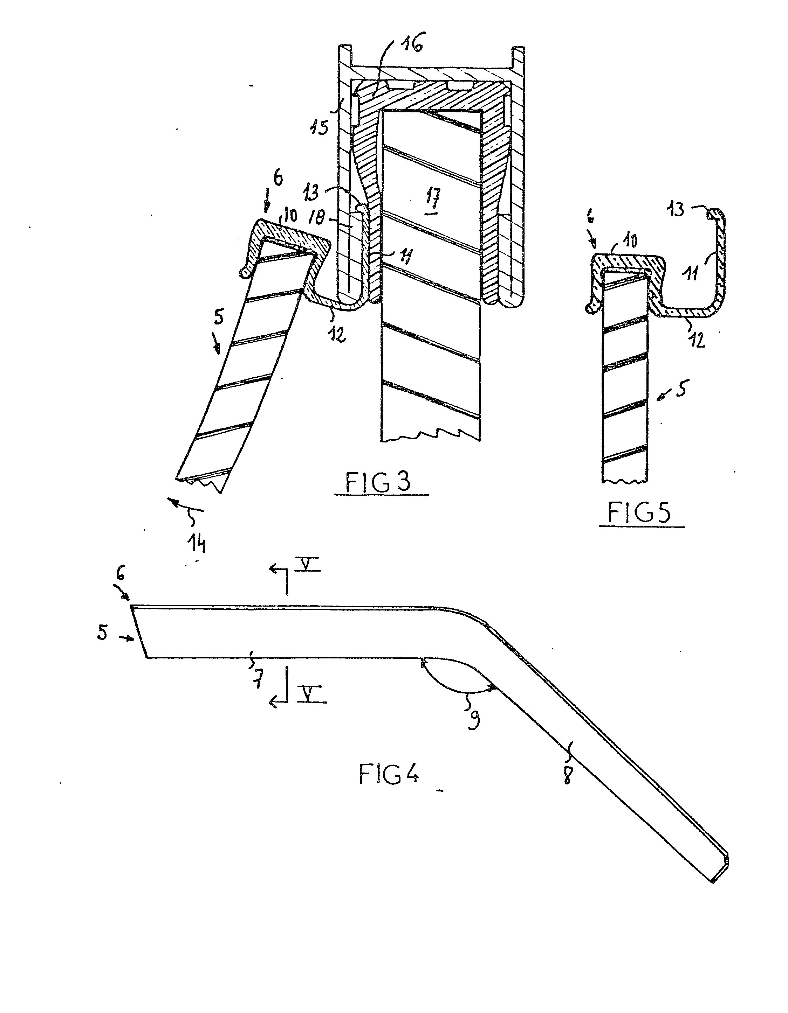

Le profilé rapporté 6 est fait en une matière différente de celle de la bande 5. Ce profilé comprend d'une part une gouttière 10, ouverte vers le bas, qui vient coiffer le bord longitudinal supérieur de la bande 5, et d'autre part une aile latérale 11 qui s'étend vers le haut à partir du bord libre d'une portion sensiblement horizontale 12 solidaire elle-même du bord inférieur de l'aile interne de la gouttière 10 (fig 3).

Cette aile latérale 11 comporte, sur son bord libre, un bourrelet longitudinal 13 tourné du côté de la gouttière 10. Le fond et l'aile externe de la gouttière 10 comportent de préférence sur leurs faces externes respectives un revêtement métallique brillant, ces faces étant, en fait, les seules parties du profilé 6 qui sont visibles de l'extérieur du véhicule.

Le découpage de la bande 5 est effectué en fonction de la forme des fenêtres du véhicule à équiper. Le profilé 6 est pincé sur le bord supérieur de la bande 5, et collé sur cette bande par de la colle introduite dans le fond de la gouttière 10 au moment du montage. Pour permettre un serrage efficace, on prévoit une gouttière 10 d'une largeur inférieure à l'épaisseur de la bande 5, le profilé se déformant élastiquement au montage. Ce profilé étant fait en une matière souple, on peut sans difficultés l'obliger à se conformer au profil exact du bord supérieur de la bande 5. On découpe donc simplement le profilé dans une pièce de grande longueur obtenue par extrusion de matière plastique.

On notera qu'il est possible de fabriquer des déflecteurs de divers types, pour plusieurs sortes de véhicules, sans utiliser un matériel coûteux, puisqu'il n'y a qu'à découper des pièces dans une plaque pour confectionner les bandes, et qu'à découper des longueurs de profilé pour confectionner le profilé rapporté.

En outre, si on doit apporter un soin particulier au découpage du bord inférieur de la bande, le bord supérieur et éventuellement les extrémités de celle-ci seront ultérieurement cachées par le profilé, et ne demandent donc aucune précaution particulière.

Le fonctionnement est le suivant :

Au moment d'installer le déflecteur sur la fenêtre correspondante du véhicule, on rapproche légèrement l'une de l'autre les deux parties 7 et 8 de la bande 5 en s'assurant bien que ce mouvement s'accompagne d'un bombage vers l'extérieur de la bande 5 dans son ensemble (flèche 14, figure 3). Lorsque le profilé 6 reproduit sensiblement le dessin des bords 2 et 3 de la portière, on engage l'aile latérale 11 de la gouttière entre la paroi métallique 15 de l'encadrement de la fenêtre et un joint souple 16 à section transversale en U. Le joint 16 est celui qui est prévu à l'origine sur le véhicule pour venir coiffer le bord supérieur de la vitre 17 quand cette dernière est remontée. Le bourrelet longitudinal 13 vient s'encliqueter au-dessus du bord supérieur d'un rabat métallique interne

18 de l'encadrement, ce qui assure un véritable verrouillage du déflecteur sur la portière.

Le déflecteur suivant l'invention présente notamment les avantages suivants :

- Il est d'un coût de fabrication peu élevé, même dans le cas où il s'agit d'équiper des véhicules de types différents : on n'utilise pas d'outillage coûteux tel qu'un moule de thermoformage, auquel cas il faudrait disposer d'autant de moules différents qu'il existe de type de véhicules.

- Il est pratiquement inaltérable.

- Il se fixe rapidement et solidement sur le véhicule, sans aucune transformation de ce dernier.

- Lorsque le véhicule est à l'arrêt et en stationnement, le déflecteur reste pratiquement verrouillé sur le véhicule, d'une part grâce à l'engagement à force et au collage de la bande dans la gouttière du profilé, et d'autre part grâce à l'encliquetage du bossage de l'aile latérale du profilé à l'intérieur de l'encadrement de la fenêtre.

- Il ne comporte aucune zone amincie fragile, si bien qu'il ne s'ébrèche ni pendant le transport ni lors du montage.

<u>REVENDICATIONS</u>

1. Déflecteur de portière, pour un véhicule automobile, comprenant une bande plane, transparente ou translucide, destinée à être fixée le long du bord supérieur sensiblement horizontal et le long du bord avant incliné d'une fenêtre de portière, caractérisé en ce que ladite bande, qui est constituée par une portion d'une plaque plane flexible, comprend, lorsqu'elle est posée à plat, deux parties sensiblement rectilignes formant entre elles un angle plus ouvert que l'angle formé par les deux bords précités de la fenêtre, tandis que le bord longitudinal supérieur de cette bande est solidaire d'un profilé rapporté qui est fait en une autre matière que la bande, et qui comporte une aile latérale qu'on engage à l'intérieur de l'encadrement de la fenêtre.

2. Déflecteur suivant la revendication 1, caractérisé en ce que le profilé est fait en une matière souple et extrudée.

3. Déflecteur suivant l'une quelconque des revendications précédentes, caractérisé en ce que le profilé comprend d'une part une gouttière ouverte vers le bas, qui vient coiffer le bord longitudinal supérieur de la bande, et d'autre part l'aile latérale qui s'étend vers le haut à partir d'une portion sensiblement horizontale solidaire du bord inférieur de l'aile interne de la gouttière du profilé.

4. Déflecteur suivant la revendication 3, caractérisé en ce que le bord supérieur de la bande est engagée à force dans la gouttière du profilé, et est collée dans cette gouttière.

5. Déflecteur suivant l'une quelconque des revendications 3 et 4, caractérisé en ce que les faces externes respectives du fond de la gouttière et de l'aile externe de la gouttière du profilé sont munies d'un revêtement métallique brillant.

6. Déflecteur suivant l'une quelconque des revendications précédentes, caractérisé en ce que l'aile latérale du profilé comporte sur son bord libre un bourrelet tourné vers la gouttière, et qui est destiné à venir s'encliqueter au-dessus du bord supérieur d'un rabat métallique interne de l'encadrement de la fenêtre lorsque ladite aile latérale est introduite entre la paroi métallique dudit encadrement et un joint souple à section transversale en U prévu pour venir coiffer le bord supérieur de la vitre lorsque cette vitre est remontée.

FIG 1

FIG 2

0036058

FIG 3

FIG 5

FIG 4

# RAPPORT DE RECHERCHE EUROPEENNE

Office européen
des brevets

EP 80 42 0035

## DOCUMENTS CONSIDERES COMME PERTINENTS

| Catégorie | Citation du document avec indication, en cas de besoin, des parties pertinentes | Revendication concernée |
|---|---|---|
| X | FR - A - 2 356 531 (DANIEL)<br>* Page 1, ligne 1 - page 3, ligne 19; figures 1-3 * | 1-3 |
| X | DE - A - 2 358 665 (EITEL)<br>* Page 9, ligne 3 - page 10, ligne 11; figure 3 * | 1-5 |
| X | US - A - 2 468 439 (GREGORIUS)<br>* Colonne 2, ligne 14 - colonne 4, ligne 3; figures 1-4 * | 1,2,5 |
| X | DE - A - 2 645 960 (KEIL)<br>* Page 12, ligne 27 - page 13, ligne 5; figure 3 * | 1,2 |
| X | DE - A - 2 540 027 (EITEL)<br>* Page 11, ligne 14 - page 20, ligne 5; figures 1-5 * | 1-5 |
| A | AU - A - 454 394 (CYPLAS)<br>* Page 4, ligne 6 - page 5, ligne 5; figure 1 * | 1,2 |
| A | FR - A - 838 800 (DAIMLER BENZ)<br>* Page 1, ligne 16 - page 2, ligne 25; figures 1,2 * | 1,2 |

./.

Le présent rapport de recherche a été établi pour toutes les revendications

| Lieu de la recherche | Date d'achèvement de la recherche | Examinateur |
|---|---|---|
| La Haye | 11-12-1980 | AYITER |

**CLASSEMENT DE LA DEMANDE (Int. Cl. 3)**

B 60 J 1/20

**DOMAINES TECHNIQUES RECHERCHES (Int. Cl. 3)**

B 60 J 1/

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

OEB Form 1503.1  06.78

**Office européen des brevets**

**RAPPORT DE RECHERCHE EUROPEENNE**

| DOCUMENTS CONSIDERES COMME PERTINENTS | | | CLASSEMENT DE LA DEMANDE (Int. Cl. ³) |
|---|---|---|---|
| Catégorie | Citation du document avec indication, en cas de besoin, des parties pertinentes | Revendication concernée | |
| A | DE - A - 3 718 348 (SPLITHOFF)<br>* Page 9, ligne 10 - page 10, ligne 4; figures 2,3 * | 1,2 | |
| | -- | | |
| A | CH - A - 595 224 (JAGGI)<br>* Colonne 1, lignes 14-20; figures 1-3 * | 1,2 | |
| | -- | | |
| A | US - A - 3 294 439 (PHILLIPS)<br>* Colonne 2, ligne 36 - colonne 3, ligne 26; figures 1-3 * | 1 | **DOMAINES TECHNIQUES RECHERCHES (Int. Cl. ³)** |
| | -- | | |
| A | FR - A - 2 159 347 (FLECK)<br>* Page 2, ligne 21 - page 3, ligne 3; figures 1,2,4 * | 1,2 | |
| | -- | | |
| L | FR - A - 2 448 990 (RENAULT)<br>* Page 2, ligne 12 - page 6, ligne 29; figures 1-7 * | 1-4,6 | |
| | -- | | |
| L | FR - A - 2 443 941 (ACRYL)<br>* Texte entier; figures 1-5 * | 1-6 | |
| | ---- | | |

OEB Form 1503.2  06.78